# EUROPEAN PATENT SPECIFICATION

(11) **EP 3 717 098 B1**
(45) Date of publication and mention of the grant of the patent: **20.07.2022**
(21) Application number: 17832092.5
(22) Date of filing: 01.12.2017
(51) Int. Cl.: B01D 33/21, B01D 33/37, B01D 33/46, B01D 35/16, B01D 37/04, B01D 29/39, B01D 29/64, B01D 29/94

(54) **ROTARY FILTERING APPARATUS**
ROTATIONSFILTER
FILTRE ROTATIF

(43) Date of publication of application: 07.10.2020
(73) Proprietor: Caleffi S.p.A., 28010 Fontaneto d'Agogna (NO) (IT)
(72) Inventor: CALEFFI, Marco, 28010 Fontaneto d'Agogna (NO) (IT)
(74) Representative: Siniscalco, Fabio
(86) International application number: PCT/IB2017/057569
(87) International publication number: WO 2019/106414

(56) References cited:
- GB-A- 726 565
- US-A- 3 497 452
- US-A- 3 907 681
- US-A- 3 957 636

## Description

### BACKGROUND OF THE INVENTION

The object of the present invention is a dirt-separating filtering apparatus, intended for being installed particularly, but not exclusively, in closed-circuit heating plants.

### PRIOR ART

Dirt-separating filtering apparatuses are known that are installed in closed-circuit heating plants for the purpose of ensuring the cleaning of the hydraulic circuit of the heating plant.

These apparatuses normally provide a cylindrical body closed by a removable lid and one or more filtering cartridges inside the cylindrical body. The cylindrical body is provided with flanged connections for the flowing in and out of the heat-carrier fluid to be filtered and a sludge drain cock. These apparatuses also have other components that are not disclosed here.

The filtering cartridges inside these apparatuses retain the impurities flowing in the hydraulic circuit so as to avoid possible damage to the various components of the hydraulic circuit such as boilers, pumps, valves, radiators and others.

The dirt-separating filtering apparatuses disclosed above have various drawbacks.

In order to clean the filtering cartridges, it is necessary to demount the lid and wash each cartridge. This is rather time-consuming, in particular because the lid is normally fixed with several bolts, and this entails maintenance costs of a certain amount.

During operation of the hydraulic circuit, accumulation over time of dirt causes an increase of pressure drop, this jeopardizing the very operation of the hydraulic circuit.

The filtering capacity of the filtering cartridges is not high.

The cost of these apparatuses is relatively high and the overall dimensions are rather great.

Further, a wide range of models is required to adapt to various types and dimensions of hydraulic circuit, and this involves high production, storage and management costs.

US3497452 relates to a method and apparatus for clarifying a liquid with a filter and for intermittently removing filter cake deposited on the surface of the filter automatically. US 3 957 636 A, GB 726 565 A and US 3 907 681 A show other filter devices.

### OBJECT OF THE INVENTION

The object of the present invention is to propose a dirt-separating filtering apparatus that is able to overcome the drawbacks disclosed above.

### SHORT DESCRIPTION OF THE INVENTION

This object is achieved by a dirt-separating filtering apparatus in accordance with claim 1.

### SHORT DESCRIPTION OF THE DRAWINGS

In order to better understand the invention, a description is given below of a nonlimiting exemplary embodiment thereof, illustrated in the attached drawings in which:
figure 1 is a perspective view of a dirt-separating filtering apparatus according to the invention;
figure 2 is a perspective view from the opposite side of the apparatus of figure 1;
figure 3 is an axially sectioned perspective view of the apparatus of figure 1;
figure 4 is a frontal section view of the apparatus of figure 1;
figure 5 is a radially sectioned perspective view of a component of the apparatus of figure 1;
figures 6, 7 are perspective views of the component of figure 5, showing the fitting of a detail of the component of figure 5;
figures 8, 9 are views of an axial section of another two components of the apparatus of figure 1;
figure 10 is a block diagram showing the control system for controlling the apparatus of figure 1;
figures 11-14 show, in the perspective view of figure 3, various operating steps of the apparatus of figure 1.

### DETAILED DESCRIPTION OF THE INVENTION

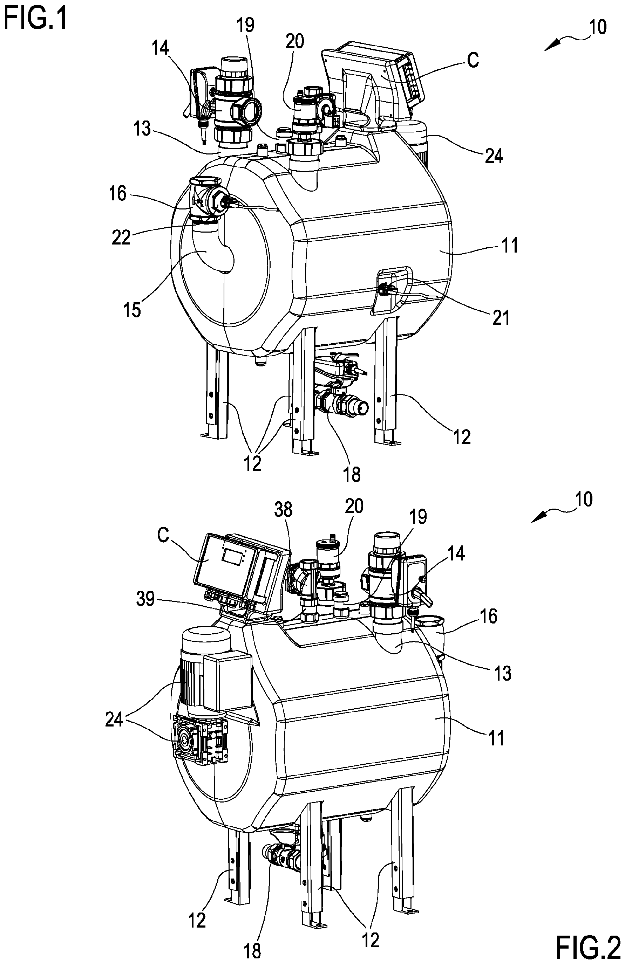

The dirt-separating filtering apparatus illustrated in figure 1, indicated generally by 10, is intended in particular for being installed in closed-circuit heating plants.

General reference is made below to figures 1-4.

The apparatus 10 provides a barrel shape hollow body 11, with a horizontal axis, provided with four supporting legs 12.

The body 11 is provided above with an inlet conduit 13 on which an electrically controlled shut-off valve 14 is fitted. The conduit 13 is intended for example for being connected to the heat generator of the heating plant.

The body 11 is further provided axially with an outlet conduit 15 on which a nonreturn valve 16 is fitted to prevent the return of fluid to the body 11. The conduit 15 is intended for being connected to the heat exchangers of the heating plant.

Below, the body 11 is provided with a sludge drain conduit 17, along which an electrically controlled shut-off valve 18 is fitted.

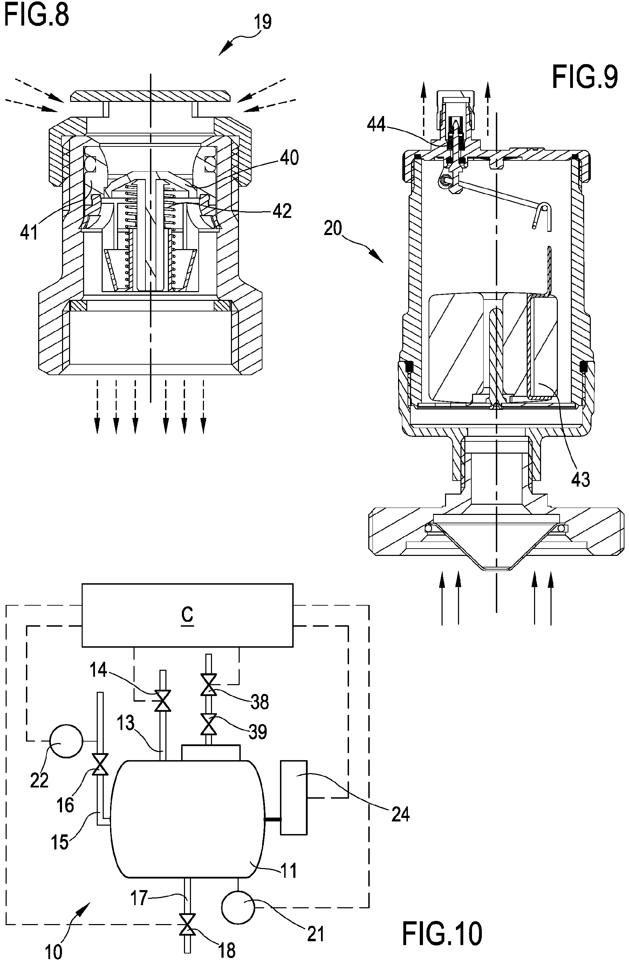

In the upper part of the body 11, an air inlet valve 19 and an air vent valve 20 are also fitted, which are illustrated in detail in figures 8, 9 respectively.

The apparatus 10 is provided with a pressure sensor 21, fitted laterally on the hollow body 11, which is suitable for measuring the pressure inside the hollow body 11, and with a pressure sensor 22, fitted on the outlet of the nonreturn valve 16, which is suitable for measuring the pressure inside the outlet conduit 15 downstream of the nonreturn valve 16.

Inside the hollow body 11, a hollow shaft 23 is fitted axially in a rotating manner. At one end, the hollow shaft 23 is connected to an electric gear motor 24 fixed outside to the body 11; at the other end, the hollow shaft 23 is connected to the outlet conduit 15 by a rotating joint 25.

A series of filtering discs 26, which rotate integrally with the shaft 23, are fitted removably on the hollow shaft 23.

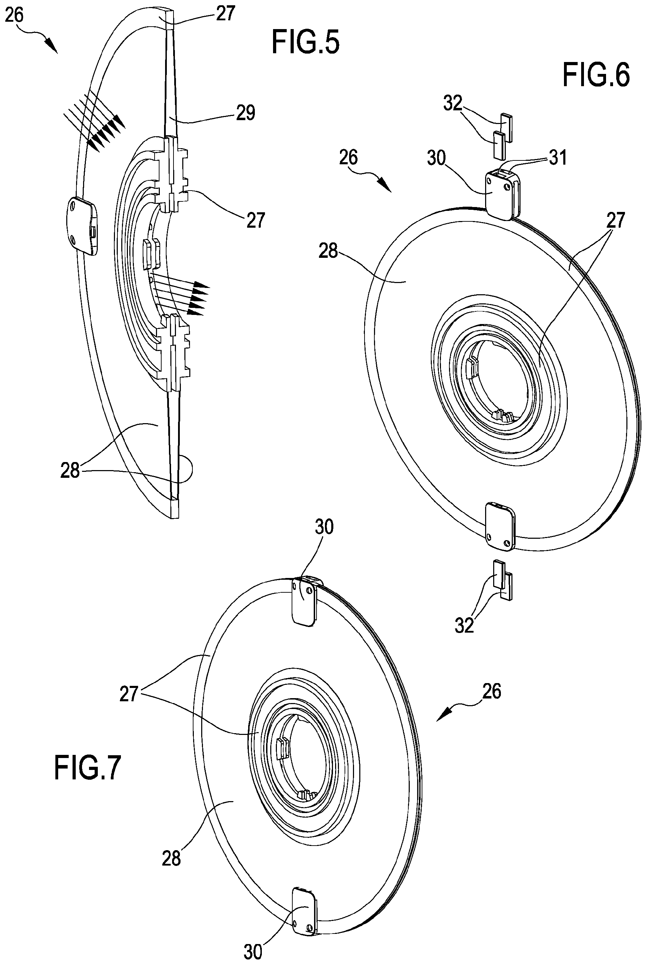

The configuration of each filtering disc 26 is illustrated in figures 5-7. Each filtering disc 26 is formed by a circular frame 27 to which a textile covering 28 is fitted inside which a chamber 29 is formed. The dimension of the mesh of the textile can be of the order of a few tens of microns to provide suitable filtration.

Two staples, each of which is provided with seats 31 into which permanent magnets 32 are inserted, are fixed to the frame 27 at opposite positions.

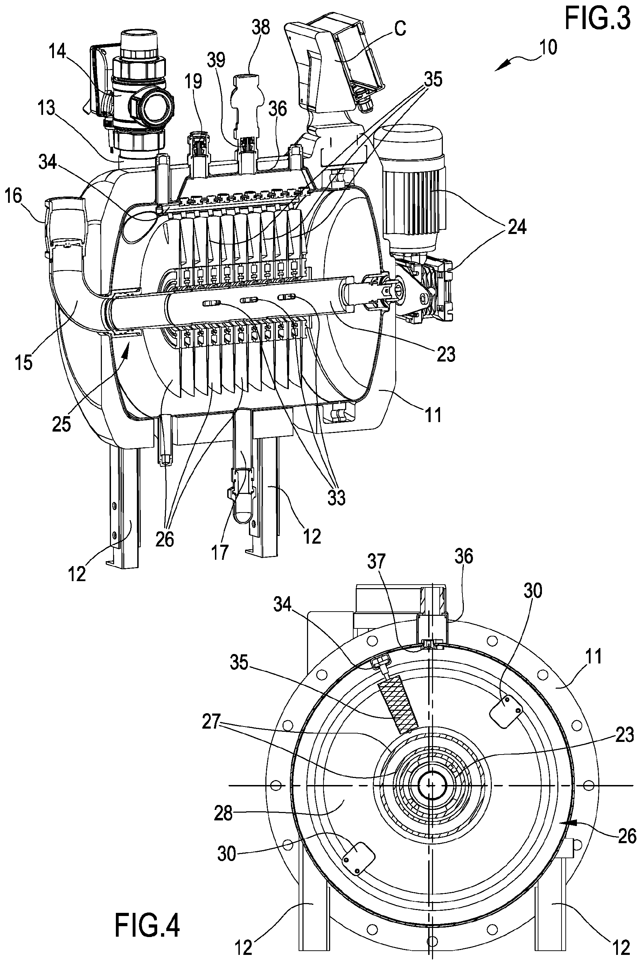

The chamber 29 of each filtering disc 26 is in communication with the inside of the hollow shaft 23 through openings 33 obtained in the shaft 23, which are visible in figure 3.

Inside the hollow body 11, in the upper part thereof, a longitudinal section bar 34 is fixed that runs parallel to the axis of the body 11. To the section bar 34 a series of removable brushes 35 is fixed; each of the two external end brushes 35 is in contact with the textile covering of a respective external face of one of the two external filtering discs 26 and extends over the entire radial extent of the covering, as shown in figure 4; each of the inner brushes 35 is in contact with the textile coverings of the two external faces of two respective opposite internal filtering discs 26 and extends over the entire radial extent of the coverings.

Above the section bar 34 a longitudinal manifold 36 is fixed, parallel to the axis of the body 11; in the lower part of the manifold 36 a series of spraying nozzles 37 is fitted at the filtering discs 26, as shown in figure 4; each nozzle 37 is directed between two respective adjacent filtering discs 26. The manifold 36 is connected to the water supply by an electrically controlled valve 38. Between the manifold 36 and the valve 38 a nonreturn valve 39 is arranged.

The electrically controlled valves 14 and 18 can for example be motor-driven ball valves, whereas the electrically controlled valve 38 can be a solenoid valve.

The apparatus 10 also provides an electronic control unit C, fitted in the upper part of the apparatus 10, connected to the various electric devices disclosed above.

In figure 10, the connection of the control unit C to the various devices is shown schematically. As is noted, the control unit C is connected to the valves 14,18,38, to the pressure sensors 21,22, and to the electric gear motor 24.

The control unit C is provided with a display and with commands for programming and controlling the apparatus 10.

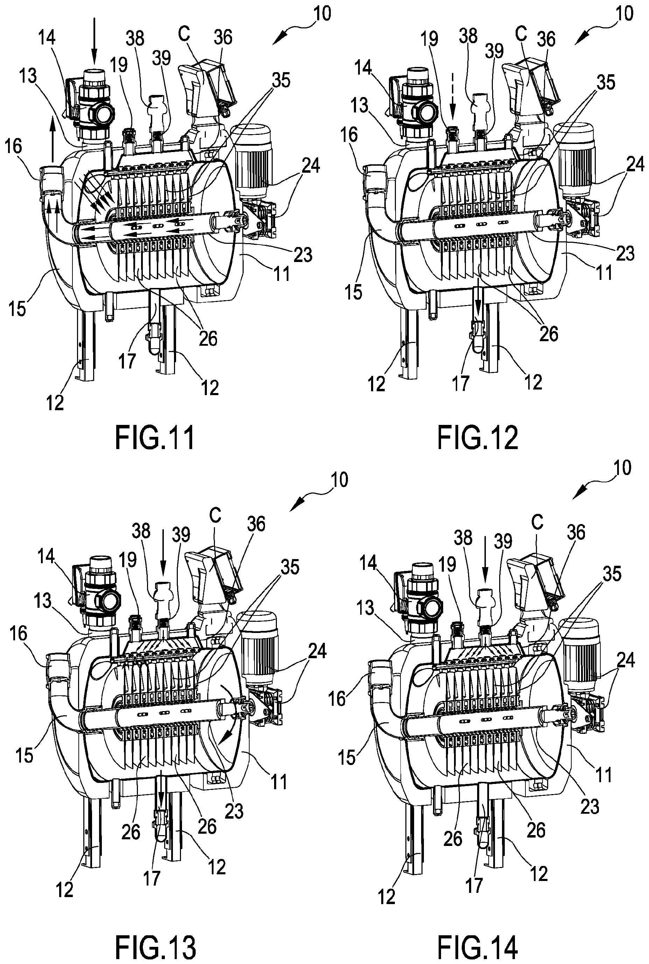

The operation of the dirt-separating filtering apparatus 10 is disclosed below, with particular reference to figures 11-14, which show various operating steps of the apparatus 10, and with reference also to the preceding figures.

Fig. 11 shows the apparatus 10 in a normal filtering operating step. The valve 14 is open, whereas the valves 18 and 38 are closed and the gear motor 24 is deactivated. As indicated by the arrows, the dirty fluid coming from the heating plant flows inside the hollow body 11 through the inlet conduit 13, flows through the textile coverings 28 of the filtering discs 26, flows through the inside of the hollow shaft 23 and flows out the outlet conduit 15. The impurities in the fluid are retained on the external faces of the filtering discs 26 by the textile coverings 28 of the discs and thus remain inside the hollow body 11; the ferrous particles in the dirty fluid are retained on the external faces of the filtering discs 26 by the magnets 32 arranged on the periphery of the discs 26 and thus also remain inside the hollow body 11; the thus filtered fluid on the other hand reaches the other parts of the plant through the outlet conduit 15.

Fig.12 shows the apparatus 10 in the step of emptying the hollow body 11. The valve 18 is open, whereas the valves 14 and 38 are closed and the gear motor 24 is deactivated. In this step the entering of the dirty fluid is stopped, and on the other hand the dirty fluid in the hollow body 11 is drained through the drain conduit 17, as indicated by the arrow. The nonreturn valve 16 prevents the return of filtered fluid to the hollow body 11. The valve 19 opens for entering air into the hollow body 11 so as to enable the dirty fluid to be drained. The entry of air through the valve 19 is illustrated in detail by the arrows in figure 8: the valve 19 has a shutter 40 inside maintained in a closed position against a seat 41 by a calibrated spring 42; when the outer pressure exceeds the pressure inside the hollow body 11 by a set value, the shutter 40 moves away from the seat 41, counteracting the action of the spring 42, permitting the entry of air.

Fig. 13 shows the apparatus 10 during the step of cleaning the filtering discs 26 through clean water. The valves 18 and 38 are open and the gear motor 24 is activated, whilst the valve 14 is closed. In this step, as indicated by the arrows, the water coming from the water supply flows in the manifold 36 and flows out the nozzles 37 so as to spray high pressure water onto the filtering discs 26 and onto the brushes 35 below. At the same time, the gear motor 24 rotates the hollow shaft 23 and the filtering discs 26 therewith; in the rotatory movement of the filtering discs 26 the fixed brushes 35 slide along the entire annular external surface of the external faces of the filtering discs 26. This combined spraying and sliding action enables the settled dirt to be removed from the external faces of the filtering discs 26. The dirty fluid that accumulates in the hollow body 11 is drained through the drain conduit 17, as indicated by the arrow. As water and dirt accumulate in the body 11, the air in the hollow body 11 exits the valve 20 as illustrated in detail by the arrows in figure 9: the valve 20 has a float 43 inside that drives a shutter 44; when the float 43 is in a lower position because of the absence of fluid in the valve 20 the shutter 44 is open and enables the air to escape outside; when the fluid flows in the valve 20 the float 43 rises and closes the shutter 44. The nonreturn valve 39 prevents dirty water returning to the water supply.

Fig.14 shows the apparatus 10 during the step of restoring normal filtering operating conditions, after cleaning of the filtering discs 26 and draining of the dirty fluid coming from cleaning. In this step the valve 38 is open, whereas the valves 14 and 18 are closed and the gear motor 24 is deactivated. The supply water, as indicated by the arrows, is sprayed inside the hollow body 11 through the nozzles 37 and the hollow body 11 fills with supply water. When the pressure detected by the pressure sensor 21 inside the hollow body 11 corresponds to the pressure detected by the pressure sensor 22 at the outlet of the hollow body 11 downstream of the nonreturn valve 16, the valve 38 is closed and the normal filtering operation step of the apparatus 10 can restart as seen above with reference to figure 11.

Alternatively, loading during the restoral step can be performed directly with the plant fluid of the heating plant, by the opening controlled by the valve 14, while keeping the valves 18,38 closed and the gear motor 24 deactivated.

The electronic control unit C commands and controls all the operations seen above in the various steps. The steps seen can be started up automatically by suitable programming of the electronic control unit C or can be started up manually by an operator.

The control unit C can be managed remotely, for example via a computer network.

The disclosed and illustrated apparatus 10 has several advantages.

In order to clean the filtering discs 26, it is not necessary to perform any disassembling operation. This means time saving and low maintenance costs.

The possibility of cleaning frequently the filtering discs 26, in view of the ease and speed of the operation, does not allow dirt to accumulate on the filtering discs and thus avoids pressure drop during operation of the plant.

The filtering capacity of the filtering discs is high.

The cost of the apparatus 10 is not high and the overall dimensions are relatively small.

A wide range of models is not required to adapt to the various types and dimensions of plant, and this lowers production, storage and management costs.

It is clear that variants on and/or additions to what has been disclosed above and illustrated in the attached drawings can be provided.

The hollow body can have a vertical axis.

The configuration of the hollow body and of the various illustrated components of the apparatus can vary according to needs. For example, the filtering discs can be replaced by filtering elements with a different configuration, which perform the same function.

The arrangement of the components can be different from what has been illustrated, always depending on needs.

The number and the arrangement of the magnets on each filtering disc can vary.

The disclosed and illustrated apparatus is particularly used in closed-circuit heating plants, but can also be used in other types of plant, for example sanitary plants, because it is possible to use filtering elements with different filtering capacities.

## Claims

1. Dirt-separating filtering apparatus (10), in particular for filtering fluid of closed-circuit heating plants, comprising a hollow body (11) provided with an inlet conduit (13), an outlet conduit (15), and a drain conduit (17), a first electrically controlled valve (14) for opening or closing the inlet conduit (13) and a second electrically controlled valve (18) for opening or closing the drain conduit (17), a series of filtering elements (26) inside the hollow body (11) for filtering entering dirty fluid so as to obtain filtered exiting fluid, a series of brushes (35) in contact with the filtering elements (26) for brushing the filtering elements (26), electric motor means (24) for making a reciprocal brushing movement between the brushes (35) and the filtering elements (26), spraying means (37) inside the hollow body (11) supplied by washing fluid through a third electrically controlled valve (38) for washing the filtering elements (26) and the brushes (35), a programmable electronic control unit (C) connected to the electric control valves (14,18,38) and to the electric motor means (24) to command, control and switch the apparatus between a step of filtering and a step of cleaning the filtering elements (26), **characterized in that** magnetic means (30-32) are provided fitted to the filtering elements (26) to attract and retain on the filtering elements (26) the ferrous particle in the fluid, wherein the magnetic means comprise a series of cases (30), fixed annularly along the surface of the filtering elements (26), inside each of which one or more permanent magnets (31) are inserted removably.

2. Apparatus according to claim 1, wherein a first pressure sensor (21) for measuring the pressure inside the hollow body (11) and a second pressure sensor (22) for measuring the pressure at the outlet of the hollow body (11) are provided, both connected to the electronic control unit (C) that commands, controls and switches the apparatus according to the pressure detected by the sensors (21,22).

3. Apparatus according to any preceding claim, wherein the filtering elements (26) are mounted on a hollow shaft (23) through which the filtered fluid flows to the outlet conduit (15).

4. Apparatus according to claim 3, wherein the motor means comprise a gear motor (24) connected to the hollow shaft (23) to rotate the hollow shaft (23) and wherein the brushes (35) are fitted inside the hollow body (11) so as to be fixed to the rotating filtering elements (26) and so as to be able to be removed by replacement.

5. Apparatus according to claim 3 or 4, wherein each filtering element (26) is formed by a frame (27) to which a textile covering (28) is fitted for filtering, inside which a chamber (29) is formed and wherein the chamber (29) of each filtering element (26) is in communication with the inside of the hollow shaft (23) through openings (33) obtained in the hollow shaft (23).

6. Apparatus according to claim 2, wherein upstream of the second pressure sensor (22) a nonreturn valve (16) is fitted.

7. Apparatus according to any preceding claim, wherein downstream of the third valve (38) a nonreturn valve (39) is fitted.

8. Apparatus according to any preceding claim, wherein in the upper part of the hollow body (11) an air inlet valve (19) and an air vent valve (20) are fitted.

9. Apparatus according to any preceding claim, wherein in the filtering step the electronic control unit (C) opens the first valve (14), whilst it closes the second and the third valve (18,38) and deactivates the electric motor means (24), such that the dirty fluid flows in the hollow body (11) through the inlet conduit (13), flows through the filtering elements (26) for filtration and flows out the outlet conduit (15).

10. Apparatus according to any preceding claim, wherein in the step of cleaning the filtering elements the electronic control unit (C) opens the second and the third valve (18,38) and activates the electric motor means (24), whilst it closes the first valve (14), such that the spraying means (37) sprays high-pressure washing fluid onto the filtering elements (26) and onto the brushes (35) and simultaneously the electric motor means (24) places the brushes (35) and the filtering elements (26) in reciprocal movement to remove the deposited dirt from the filtering elements (26) and to drain through the drain conduit (17) the dirty fluid that has accumulated in the hollow body (11).

11. Apparatus according to any preceding claim, wherein in a step of emptying the hollow body (11) the electronic control unit (C) opens the second valve (18), whilst it shuts the first and third valve (14,38) and deactivates the electric motor means (24) to drain the dirty fluid in the hollow body (11) through the drain conduit (17).

12. Apparatus according to any one of claims 2-11, wherein in a step of restoring normal filtration operating conditions, after cleaning the filtering elements (26), the electronic control unit (C) opens the third valve (38), whilst it closes the first and second valve (14,18) and deactivates the electric motor means (24), so as to fill the hollow body (11) with fluid until the pressure inside the hollow body (11) corresponds to the pressure detected at the outlet of the hollow body (11).

13. Apparatus according to any one of claims 2-11, wherein in a step of restoring normal filtration operating conditions, after cleaning the filtering elements (26), the electronic control unit (C) opens the first valve (14), whilst it closes the second and the third valve (18,38) and deactivates the electric motor means (24), so as to fill the hollow body (11) with fluid until the pressure inside the hollow body (11) corresponds to the pressure detected at the outlet of the hollow body (11).

14. Apparatus according to any preceding claim, wherein the control unit (C) is remote-controlled.

## Patentansprüche

1. Schmutzabscheidende Filtrierungseinrichtung (10), insbesondere zum Filtern von Fluid von Heizungsanlagen mit geschlossenem Kreislauf, umfassend einen Hohlkörper (11), der mit einer Einlassleitung (13), einer Auslassleitung (15) und einer Abflussleitung (17) bereitgestellt ist, ein erstes elektrisch gesteuertes Ventil (14) zum Öffnen oder Schließen der Einlassleitung (13) und ein zweites elektrisch gesteuertes Ventil (18) zum Öffnen oder Schließen der Abflussleitung (17), eine Reihe von Filtrierungselementen (26) im Inneren des Hohlkörpers (11) zum Filtern des eintretenden verschmutzten Fluids, sodass ein gefiltertes austretendes Fluid erhalten wird, eine Reihe von Bürsten (35), die mit den Filtrierungselementen (26) in Kontakt stehen, um die Filtrierungselemente (26) zu bürsten, Elektromotormittel (24) zum Ausführen einer hin- und hergehenden Bürstenbewegung zwischen den Bürsten (35) und den Filtrierungselementen (26), Sprühmittel (37) im Inneren des Hohlkörpers (11), die durch ein drittes elektrisch gesteuertes Ventil (38) mit Waschfluid versorgt werden, um die Filtrierungselemente (26) und die Bürsten (35) zu waschen, eine programmierbare elektronische Steuereinheit (C), die mit den elektrischen Steuerventilen (14, 18, 38) und den Elektromotormitteln (24) verbunden ist, um die Einrichtung zwischen einem Schritt des Filterns und einem Schritt des Reinigens der Filterelemente (26) zu steuern, zu regeln und umzuschalten, **dadurch gekennzeichnet, dass** magnetische Mittel (30-32) an den Filtrierungselementen (26) angebracht bereitgestellt sind, um die eisenhaltigen Partikel in dem Fluid anzuziehen und auf den Filtrierungselementen (26) zurückzuhalten, wobei die magnetischen Mittel eine Reihe von Gehäusen (30) umfassen, die ringförmig entlang der Oberfläche der Filtrierungselemente (26) befestigt sind, in denen jeweils ein oder mehrere Permanentmagnete (31) herausnehmbar eingesetzt sind.

2. Einrichtung nach Anspruch 1, wobei ein erster Drucksensor (21) zur Messung des Drucks im Inneren des Hohlkörpers (11) und ein zweiter Drucksensor (22) zur Messung des Drucks am Auslass des Hohlkörpers (11) bereitgestellt sind, die beide mit der elektronischen Steuereinheit (C) verbunden sind, welche die Einrichtung gemäß dem von den Sensoren (21, 22) erfassten Druck steuert, regelt und umschaltet.

3. Einrichtung nach einem vorstehenden Anspruch, wobei die Filtrierungselemente (26) auf einer Hohlwelle (23) montiert sind, durch die das gefilterte Fluid zur Auslassleitung (15) strömt.

4. Einrichtung nach Anspruch 3, wobei die Motormittel einen Getriebemotor (24) umfassen, der mit der Hohlwelle (23) verbunden ist, um die Hohlwelle (23) zu drehen, und wobei die Bürsten (35) im Inneren des Hohlkörpers (11) so angebracht sind, dass sie an den rotierenden Filtrierungselementen (26) befestigt sind und durch Austausch herausgenommen werden können.

5. Einrichtung nach Anspruch 3 oder 4, wobei jedes Filtrierungselement (26) durch einen Rahmen (27) gebildet ist, an dem eine textile Abdeckung (28) zur Filterung angebracht ist, in der eine Kammer (29) ausgebildet ist, und wobei die Kammer (29) jedes Filtrierungselements (26) durch in der Hohlwelle (23) erhaltene Öffnungen (33) mit dem Inneren der Hohlwelle (23) in Verbindung steht.

6. Einrichtung nach Anspruch 2, wobei stromaufwärts des zweiten Drucksensors (22) ein Rückschlagventil (16) angebracht ist.

7. Einrichtung nach einem vorstehenden Anspruch, wobei stromabwärts des dritten Ventils (38) ein Rückschlagventil (39) angebracht ist.

8. Einrichtung nach einem vorstehenden Anspruch, wobei im oberen Teil des Hohlkörpers (11) ein Lufteinlassventil (19) und Entlüftungsventil (20) angebracht sind.

9. Einrichtung nach einem vorstehenden Anspruch, wobei die elektronische Steuereinheit (C) im Filtrierungsschritt das erste Ventil (14) öffnet, während sie das zweite und das dritte Ventil (18, 38) schließt und die Elektromotormittel (24) deaktiviert, sodass das verschmutzte Fluid in den Hohlkörper (11) durch die Einlassleitung (13) strömt, durch die Filtrierungselemente (26) zur Filtration strömt und aus der Auslassleitung (15) ausströmt.

10. Einrichtung nach einem vorstehenden Anspruch, wobei die elektronische Steuereinheit (C) im Schritt des Reinigens der Filtrierungselemente das zweite und das dritte Ventil (18, 38) öffnet und die Elektromotormittel (24) aktiviert, während sie das erste Ventil (14) schließt, sodass die Sprühmittel (37) Hochdruckwaschfluid auf die Filtrierungselemente (26) und auf die Bürsten (35) sprühen und gleichzeitig die Elektromotormittel (24) die Bürsten (35) und die Filtrierungselemente (26) in eine Hin- und Herbewegung versetzen, um den abgeschiedenen Schmutz von den Filtrierungselementen (26) zu entfernen und das verschmutzte Fluid, das sich in dem Hohlkörper (11) angesammelt hat, durch die Abflussleitung (17) abzuleiten.

11. Einrichtung nach einem vorstehenden Anspruch, wobei in einem Schritt des Entleerens des Hohlkörpers (11) die elektronische Steuereinheit (C) das zweite Ventil (18) öffnet, während sie das erste und das dritte Ventil (14, 38) schließt und die Elektromotormittel (24) deaktiviert, um das verschmutzte Fluid in dem Hohlkörper (11) durch die Abflussleitung (17) abzuleiten.

12. Einrichtung nach einem der Ansprüche 2-11, wobei die elektronische Steuereinheit (C) in einem Schritt zur Wiederherstellung normaler Filtrationsbetriebsbedingungen, nach der Reinigung der Filtrierungselemente (26), das dritte Ventil (38) öffnet, während sie das erste und zweite Ventil (14, 18) schließt und die Elektromotormittel (24) deaktiviert, um den Hohlkörper (11) mit Fluid zu füllen, bis der Druck im Inneren des Hohlkörpers (11) dem am Auslass des Hohlkörpers (11) erfassten Druck entspricht.

13. Einrichtung nach einem der Ansprüche 2-11, wobei die elektronische Steuereinheit (C) in einem Schritt zur Wiederherstellung normaler Filtrationsbetriebsbedingungen nach Reinigung der Filtrierungselemente (26) das erste Ventil (14) öffnet, während sie das zweite und das dritte Ventil (18, 38) schließt und die Elektromotormittel (24) deaktiviert, um den Hohlkörper (11) mit Fluid zu füllen, bis der Druck im Inneren des Hohlkörpers (11) dem am Auslass des Hohlkörpers (11) erfassten Druck entspricht.

14. Einrichtung nach einem vorstehenden Anspruch, wobei die Steuereinheit (C) ferngesteuert ist.

## Revendications

1. Appareil de filtrage séparateur de saletés (10), en particulier pour filtrer le fluide d'installations de chauffage en circuit fermé, comprenant un corps creux (11) muni d'un conduit d'entrée (13), d'un conduit de sortie (15) et d'un conduit de drainage (17), une première vanne à commande électrique (14) pour ouvrir ou fermer le conduit d'entrée (13) et une deuxième vanne à commande électrique (18) pour ouvrir ou fermer le conduit de drainage (17), une série d'éléments filtrants (26) à l'intérieur du corps creux (11) pour filtrer le fluide sale entrant de façon à obtenir un fluide filtré sortant, une série de brosses (35) en contact avec les éléments filtrants (26) pour brosser les éléments filtrants (26), des moyens de moteur électrique (24) pour effectuer un mouvement de brossage réciproque entre les brosses (35) et les éléments filtrants (26), des moyens de pulvérisation (37) à l'intérieur du corps creux (11) alimentés par un fluide de lavage à travers une troisième vanne à commande électrique (38) pour laver les éléments filtrants (26) et les brosses (35), une unité de commande électronique programmable (C) connectée aux vannes de commande électrique (14, 18, 38) et aux moyens de moteur électrique (24) pour commander, contrôler et commuter l'appareil entre une étape de filtrage et une étape de nettoyage des éléments filtrants (26), **caractérisé en ce que** des moyens magnétiques (30-32) sont prévus, montés sur les éléments filtrants (26) pour attirer et retenir sur les éléments filtrants (26) la particule ferreuse dans le fluide, dans lequel les moyens magnétiques comprennent une série de boîtiers (30), fixés de manière annulaire le long de la surface des éléments filtrants (26), à l'intérieur de chacun desquels un ou plusieurs aimants permanents (31) sont insérés de manière amovible.

2. Appareil selon la revendication 1, dans lequel un premier capteur de pression (21) pour mesurer la pression à l'intérieur du corps creux (11) et un second capteur de pression (22) pour mesurer la pression à la sortie du corps creux (11) sont prévus, tous deux connectés à l'unité de commande électronique (C) qui commande, contrôle et commute l'appareil en fonction de la pression détectée par les capteurs (21, 22).

3. Appareil selon l'une quelconque des revendications précédentes, dans lequel les éléments filtrants (26) sont montés sur un arbre creux (23) à travers lequel le fluide filtré s'écoule vers le conduit de sortie (15).

4. Appareil selon la revendication 3, dans lequel les moyens moteurs comprennent un motoréducteur (24) relié à l'arbre creux (23) pour faire tourner l'arbre creux (23) et dans lequel les balais (35) sont montés à l'intérieur du corps creux (11) de manière à être fixés aux éléments filtrants rotatifs (26) et de manière à pouvoir être retirés par remplacement.

5. Appareil selon la revendication 3 ou 4, dans lequel chaque élément filtrant (26) est formé par un cadre (27) sur lequel est fixé un revêtement textile (28) pour le filtrage, à l'intérieur duquel est formée une chambre (29) et dans lequel la chambre (29) de chaque élément filtrant (26) est en communication avec l'intérieur de l'arbre creux (23) par des ouvertures (33) obtenues dans l'arbre creux (23).

6. Appareil selon la revendication 2, dans lequel une vanne anti-retour (16) est montée en amont du second capteur de pression (22).

7. Appareil selon l'une quelconque des revendications précédentes, dans lequel une vanne anti-retour (39) est montée en aval de la troisième vanne (38).

8. Appareil selon l'une quelconque des revendications précédentes, dans lequel une soupape d'admission d'air (19) et une soupape d'évacuation d'air (20) sont montées dans la partie supérieure du corps creux (11).

9. Appareil selon l'une quelconque des revendications précédentes, dans lequel, dans l'étape de filtrage, l'unité de commande électronique (C) ouvre la première vanne (14), tandis qu'elle ferme la deuxième et la troisième vanne (18, 38) et désactive le moyen de moteur électrique (24), de sorte que le fluide sale s'écoule dans le corps creux (11) à travers le conduit d'entrée (13), s'écoule à travers les éléments de filtrage (26) pour le filtrage et s'écoule hors du conduit de sortie (15).

10. Appareil selon l'une quelconque des revendications précédentes, dans lequel, dans l'étape de nettoyage des éléments filtrants, l'unité de commande électronique (C) ouvre la deuxième et la troisième vanne (18, 38) et active le moyen de moteur électrique (24), tandis qu'elle ferme la première vanne (14), de sorte que le moyen de pulvérisation (37) pulvérise un fluide de lavage à haute pression sur les éléments de filtrage (26) et sur les brosses (35) et, simultanément, le moyen de moteur électrique (24) place les brosses (35) et les éléments de filtrage (26) dans un mouvement de va-et-vient pour enlever la saleté déposée des éléments de filtrage (26) et pour évacuer par le conduit de drainage (17) le fluide sale qui s'est accumulé dans le corps creux (11).

11. Appareil selon l'une quelconque des revendications précédentes, dans lequel, dans une étape de vidange du corps creux (11), l'unité de commande électronique (C) ouvre la deuxième vanne (18), tandis qu'elle ferme la première et la troisième vanne (14, 38) et désactive le moyen de moteur électrique (24) pour drainer le fluide sale dans le corps creux (11) à travers le conduit de drainage (17).

12. Appareil selon l'une quelconque des revendications 2-11, dans lequel, dans une étape de rétablissement des conditions normales de fonctionnement de la filtration, après le nettoyage des éléments filtrants (26), l'unité de commande électronique (C) ouvre la troisième vanne (38), tandis qu'elle ferme la première et la deuxième vanne (14, 18) et désactive le moyen moteur électrique (24), de manière à remplir le corps creux (11) de fluide jusqu'à ce que la pression à l'intérieur du corps creux (11) corresponde à la pression détectée à la sortie du corps creux (11).

13. Appareil selon l'une quelconque des revendications 2-11, dans lequel, dans une étape de rétablissement des conditions normales de fonctionnement de la filtration, après le nettoyage des éléments filtrants (26), l'unité de commande électronique (C) ouvre la première vanne (14), tandis qu'elle ferme la deuxième et la troisième vanne (18, 38) et désactive le moyen moteur électrique (24), de manière à remplir le corps creux (11) de fluide jusqu'à ce que la pression à l'intérieur du corps creux (11) corresponde à la pression détectée à la sortie du corps creux (11).

14. Appareil selon l'une quelconque des revendications précédentes, dans lequel l'unité de commande (C) est commandée à distance.
